# EUROPEAN PATENT APPLICATION

(11) **EP 3 659 689 A1**
(43) Date of publication of application: **03.06.2020**
(21) Application number: 19211264.7
(22) Date of filing: 25.11.2019
(51) Int. Cl.: B01D 29/52, B01D 29/90, B01D 63/04, C02F 1/44

(54) **SYSTEM AND METHOD FOR FILTERING WATER**

(30) Priority: 30.11.2018 US 201816205664
(71) Applicant: Pall Corporation, Port Washington, NY 11050 (US)
(72) Inventor: BENNETT, David J., Buff Point, New South Wales 2262 (AU)
(74) Representative: Hoeger, Stellrecht & Partner Patentanwälte mbB

(57) **Abstract**

A water filtration system is provided comprising first and second banks of water filter assemblies, wherein the system is arranged to provide filtered water from one bank of water filter assemblies while using some of the filtered water to reverse flush the other bank of water filtration assemblies. A method of filtering water by passing it through the system is also provided.

## Description

### BACKGROUND OF THE INVENTION

Mobile water purification systems can be desirable for a variety of uses. They are particularly desirable for groups of people, e.g., military forces in the field, needing potable water. Typically, the systems are mounted on a vehicle or trailer, and transported where needed, and operated to provide potable water.

However, there is a need for improved water purification systems. The present invention provides for ameliorating at least some of the disadvantages of the prior art. These and other advantages of the present invention will be apparent from the description as set forth below.

### BRIEF SUMMARY OF THE INVENTION

An embodiment of the invention provides a water filtration system comprising (A) a first bank comprising (a) a plurality of horizontally arranged water filtration assemblies, each water filtration assembly in the first bank comprising a filter module comprising a filter housing including a feed inlet, a filtrate outlet, and a drain outlet, the filter housing defining a filtrate flow path between the feed inlet and the filtrate outlet, and a drain fluid flow path between the feed inlet and the drain outlet, and a porous filter across the filtrate flow path, the filtrate flow path passing through upstream and downstream surfaces of the porous filter, wherein the drain fluid flow path does not pass through the surfaces of the porous filter; (b) a first bank feed manifold comprising a first bank feed inlet and a plurality of water filtration assembly inlet ports, each water filtration assembly inlet port being in fluid communication with a respective filter module feed inlet; (c) a first bank filtrate manifold comprising a first bank filtrate outlet port and a plurality of water filtration assembly outlet ports, each water filtration assembly outlet port being in fluid communication with a respective filter module filtrate outlet, the first bank filtrate outlet port being in fluid communication with a first constant flow fitting; (d) a first bank drain manifold comprising a first bank drain outlet port and a plurality of water filtration assembly drain outlet ports, each water filtration assembly drain outlet port being in fluid communication with a respective filter module drain outlet, the first bank drain outlet port being in fluid communication with a second constant flow fitting; (B) a second bank comprising (e) a plurality of horizontally arranged water filtration assemblies, each water filtration assembly in the second bank comprising a filter module comprising a filter housing including a feed inlet, a filtrate outlet, and a drain outlet, the filter housing defining a filtrate flow path between the feed inlet and the filtrate outlet, and a drain fluid flow path between the feed inlet and the drain outlet, and a porous filter across the filtrate flow path, the filtrate flow path passing through upstream and downstream surfaces of the porous filter, wherein the drain fluid flow path does not pass through the surfaces of the porous filter; (f) a second bank feed manifold comprising a second bank feed inlet and a plurality of water filtration assembly inlet ports, each water filtration assembly inlet port being in fluid communication with a respective filter module feed inlet; (g) a second bank filtrate manifold comprising a second bank filtrate outlet port and a plurality of water filtration assembly outlet ports, each water filtration assembly outlet port being in fluid communication with a respective filter module filtrate outlet, the second bank filtrate outlet port being in fluid communication with the first constant flow fitting; (h) a second bank drain manifold comprising a second bank drain outlet port and a plurality of water filtration assembly drain outlet ports, each water filtration assembly drain outlet port being in fluid communication with a respective filter module drain outlet, the second bank drain outlet port being in fluid communication with a third constant flow fitting.

In some embodiments, the water filtration system further comprising a frame having the first and second banks mounted thereon. In alternative embodiments, each bank can be mounted on a separate frame, or the banks can be mounted together, with or without a frame. In yet another embodiment, at least one bank can be mounted to a base (e.g., a base of a Joint Modular Intermodal Container (JMIC) pallet).

The first and second banks can be arranged vertically, providing an upper bank and a lower bank, or they can be arranged horizontally, providing a right bank and a left bank.

In a preferred embodiment, wherein the feed inlet of the offline bank is capped or blocked, the system comprises a common filtrate fitting comprising the first constant flow fitting, wherein the common filtrate fitting is arranged to allow filtrate flow from the online bank (e.g., the first bank) filtrate ports and first bank filtrate manifold to pass as reverse flow through the other bank (e.g., the second bank) of water filtration assemblies via the second bank filtrate manifold, the second bank module filtrate outlets, through the surfaces of the porous filter, the second bank drain ports, through the second bank drain manifold and through the common outlet, and, when the previously offline bank is now the online bank, to allow filtrate flow from the online bank (e.g., the second bank) second bank filtrate ports and second bank filtrate manifold to pass as reverse flow through the other bank (now the offline first bank) of first bank water filtration assemblies via the first bank filtrate manifold, the first bank module filtrate outlets, through the surfaces of the porous filter, the first bank drain ports, through the first bank drain manifold and through the common outlet.

In another embodiment, a method for filtering water is provided, comprising passing source water into the system and obtaining filtrate from one bank, passing a portion of the filtrate as reverse flow through the other bank, and obtaining another portion of filtrate to be treated for potability.

### BRIEF DESCRIPTION OF THE SEVERAL VIEWS OF THE DRAWING(S)

Figure 1 is an isometric front view of a water filtration system according to an embodiment of the invention, showing upper and lower banks of water filtration assemblies, each assembly including a plurality of filter modules, a feed manifold, and a frame holding the assemblies.
Figure 2 is an isometric rear view of the water filtration system shown in Figure 1, also showing each water filtration assembly including a drain manifold and a filtrate manifold.
Figure 3 is a top view of a filtrate outlet, a drain outlet, fittings, and conduits for the flow of filtrate as well as drain fluid from each of the water filtration assemblies wherein the filter modules are removed from Figure 1. The filtrate outlet includes a constant flow fitting and two filtrate outlet ports, the drain outlet includes two drain outlet ports, each communicating with a drain outlet fitting, each drain outlet fitting including a constant flow fitting.
Figure 4 is a right side view of the water filtration system shown in Figure 1.
Figure 5 is a front view of the water filtration system shown in Figure 1.
Figure 6A is a front end view of an illustrative filter module, Figure 6B is a sectional view along A-A of Figure 6B, and Figure 6C is a section view along A-A of Figure wherein the filter is not shown.
Figure 7 is a diagrammatic cross-sectional view of an illustrative constant flow valve arranged in a fitting, showing a rubber control ring which can move and reduce the diameter of the orifice as the flow rate increases.
Figure 8 is a diagrammatic representation of the individual banks in forward filtration; Figure 8A shows the upper bank in forward filtration, and Figure 8B shows the lower bank in forward filtration.

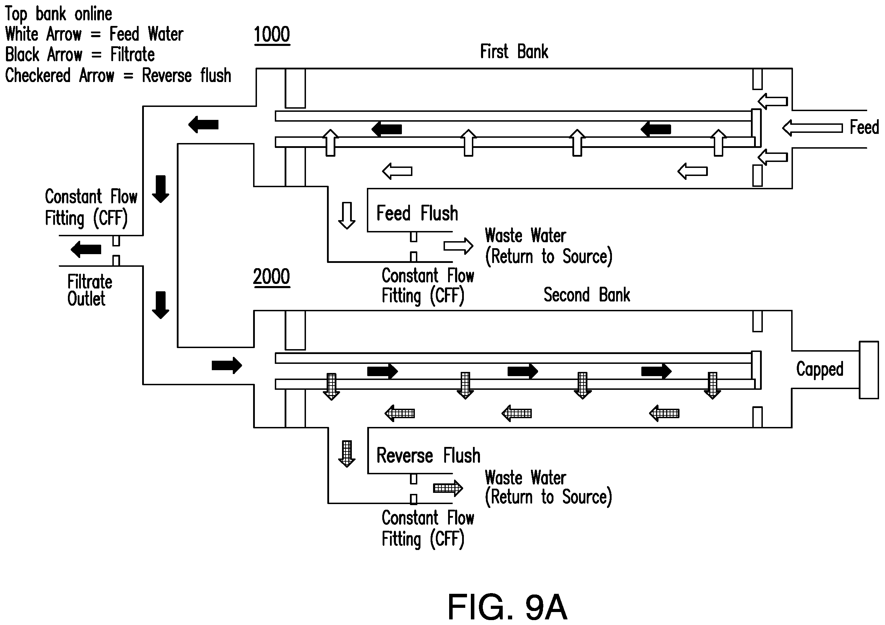

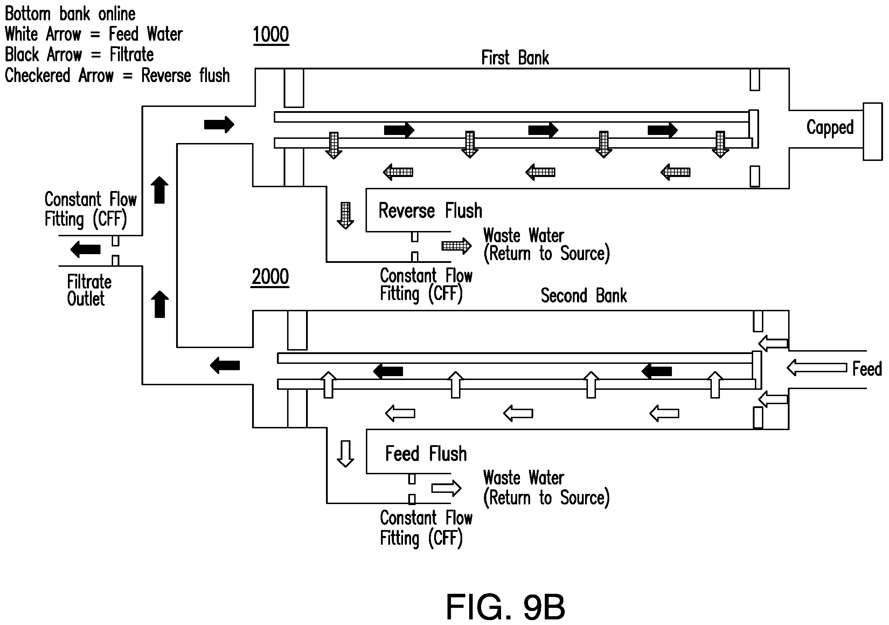

Figures 9A and 9B are diagrammatic representations of the water filtration system in operation while the first bank is "on line" in forward filtration and source water provides a constant forward flush, and the second bank is "off line" wherein the second bank is regenerated by a constant reverse flush using filtrate from the first bank (Figure 9A), and while the second bank is "on line" in forward filtration and source water provides a constant forward flush, and the first bank is "off line" wherein the first bank is regenerated by a constant reverse flush using filtrate from the second bank (Figure 9A).
Figure 10 is an isometric front view of a water filtration system according to another embodiment of the invention, showing right and left banks of water filtration assemblies, each assembly including a plurality of filter modules, a feed manifold, and a frame holding the assemblies.
Figure 11 is an isometric rear view of the water filtration system shown in Figure 10, also showing each water filtration assembly including a drain manifold and a filtrate manifold, the filtrate manifolds being joined.
Figure 12 is a top view of a filtrate outlet, a drain outlet, fittings, and a conduit for the flow of filtrate as well as conduits for drain fluid from each of the water filtration assemblies wherein the filter modules are removed from Figure 10. The filtrate outlet includes a constant flow fitting (not shown) and two filtrate outlet ports, the drain outlet includes two drain outlet ports, each communicating with a drain outlet fitting, each drain outlet fitting including a constant flow fitting (not shown).

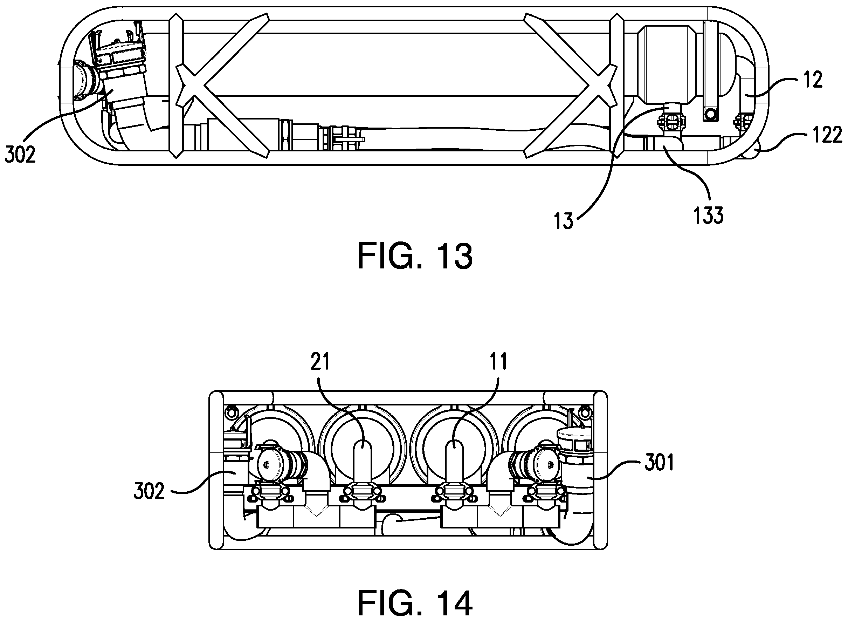

Figure 13 is a right side view of the water filtration system shown in Figure 10.
Figure 14 is a front view of the water filtration system shown in Figure 10.
Figure 15 is an isometric front view of a water filtration system according to another embodiment of the invention, similar to the embodiment shown in Figure 1, except that it is mounted on a base (illustrated as a base of a Joint Modular Intermodal Container (JMIC) pallet), rather than mounted in a frame, also showing upper and lower banks of water filtration assemblies, each assembly including a plurality of filter modules, a feed manifold, and a frame holding the assemblies.
Figure 16 is an isometric rear view of the water filtration system shown in Figure 15, also showing each water filtration assembly including a drain manifold and a filtrate manifold.
Figure 17 is an isometric front view of the water filtration system mounted on a base as shown in Figure 15, also showing side walls of the pallet.
Figure 18 is an isometric front view of the water filtration system mounted on a base as shown in Figure 16, also showing a front wall of the pallet.
Figure 19 is an isometric front view of the water filtration system mounted on a base as shown in Figure 17, also showing a top wall of the pallet.

### DETAILED DESCRIPTION OF THE INVENTION

An embodiment of the invention provides a water filtration system comprising (A) a first bank comprising (a) a plurality of horizontally arranged water filtration assemblies, each water filtration assembly in the first bank comprising a filter module comprising a filter housing including a feed inlet, a filtrate outlet, and a drain outlet, the filter housing defining a filtrate flow path between the feed inlet and the filtrate outlet, and a drain fluid flow path between the feed inlet and the drain outlet, and a porous filter across the filtrate flow path, the filtrate flow path passing through upstream and downstream surfaces of the porous filter, wherein the drain fluid flow path does not pass through the surfaces of the porous filter; (b) a first bank feed manifold comprising a first bank feed inlet and a plurality of water filtration assembly inlet ports, each water filtration assembly inlet port being in fluid communication with a respective filter module feed inlet; (c) a first bank filtrate manifold comprising a first bank filtrate outlet port and a plurality of water filtration assembly outlet ports, each water filtration assembly outlet port being in fluid communication with a respective filter module filtrate outlet, the first bank filtrate outlet port being in fluid communication with a first constant flow fitting; (d) a first bank drain manifold comprising a first bank drain outlet port and a plurality of water filtration assembly drain outlet ports, each water filtration assembly drain outlet port being in fluid communication with a respective filter module drain outlet, the first bank drain outlet port being in fluid communication with a second constant flow fitting; (B) a second bank comprising (e) a plurality of horizontally arranged water filtration assemblies, each water filtration assembly in the second bank comprising a filter module comprising a filter housing including a feed inlet, a filtrate outlet, and a drain outlet, the filter housing defining a filtrate flow path between the feed inlet and the filtrate outlet, and a drain fluid flow path between the feed inlet and the drain outlet, and a porous filter across the filtrate flow path, the filtrate flow path passing through upstream and downstream surfaces of the porous filter, wherein the drain fluid flow path does not pass through the surfaces of the porous filter; (f) a second bank feed manifold comprising a second bank feed inlet and a plurality of water filtration assembly inlet ports, each water filtration assembly inlet port being in fluid communication with a respective filter module feed inlet; (g) a second bank filtrate manifold comprising a second bank filtrate outlet port and a plurality of water filtration assembly outlet ports, each water filtration assembly outlet port being in fluid communication with a respective filter module filtrate outlet, the second bank filtrate outlet port being in fluid communication with the first constant flow fitting; (h) a second bank drain manifold comprising a second bank drain outlet port and a plurality of water filtration assembly drain outlet ports, each water filtration assembly drain outlet port being in fluid communication with a respective filter module drain outlet, the second bank drain outlet port being in fluid communication with a third constant flow fitting.

In an embodiment, the first bank filtrate manifold and the second bank manifold are joined together to provide a one piece manifold.

In some embodiments, the water filtration system further comprising a frame having the first and second banks mounted thereon. In alternative embodiments, each bank can be mounted on a separate frame, or the banks can be mounted together, with or without a frame. In yet another embodiment, at least one bank can be mounted to a base (e.g., base of a Joint Modular Intermodal Container (JMIC) pallet).

In an embodiment, the system is sufficiently light weight to be carried by a person.

The first and second banks can be arranged vertically, providing an upper bank and a lower bank, or they can be arranged horizontally, providing a right bank and a left bank.

Preferably, one bank is "online" providing forward filtration and the source water provides a constant forward flush, and the other bank is "off line" wherein the offline bank is regenerated by a constant reverse flush using filtrate from the online bank.

In a preferred embodiment, wherein the feed inlet of the offline bank is capped or blocked, the system comprises a common filtrate fitting comprising the first constant flow fitting, wherein the common filtrate fitting is arranged to allow filtrate flow from the online bank (e.g., the first bank) filtrate ports and first bank filtrate manifold to pass as reverse flow through the other bank (e.g., second bank) of water filtration assemblies via the second bank filtrate manifold, the second bank module filtrate outlets, through the surfaces of the porous filter, the second bank drain ports, through the second bank drain manifold and through the common outlet, and, when the previously offline bank is now the online bank, to allow filtrate flow from the online bank (e.g., the second bank) second bank filtrate ports and second bank filtrate manifold to pass as reverse flow through the other bank (now the offline first bank) of first bank water filtration assemblies via the first bank filtrate manifold, the first bank module filtrate outlets, through the surfaces of the porous filter, the first bank drain ports, through the first bank drain manifold and through the common outlet.

In another embodiment, a method for filtering water is provided, comprising passing source water into the system and obtaining filtrate from one bank, passing a portion of the filtrate as reverse flow through the other bank, and obtaining another portion of filtrate to be treated for potability.

For example, in one embodiment of a method for filtering water, the method comprises passing source water into the water filtration system, and into the water filtration assemblies in the first bank (e.g., the upper bank or the right bank), obtaining a filtrate, passing a portion of the filtrate as reverse flow through the water filtration assemblies in the second bank (e.g., the lower bank or the left bank), and obtaining another portion of the filtrate to be treated for potability. Typically, the portion of the filtrate to be treated for potability is passed to a storage container. Embodiments of the method can also include passing source water into the water filtration assemblies in the second bank, obtaining a filtrate, passing a portion of the filtrate as reverse flow through the water filtration assemblies in the first bank, and obtaining another portion of the filtrate to be treated for potability, e.g., wherein the portion to be treated for potability is passed to a storage container.

Alternating flow through the banks can be repeated as desired.

In accordance with an embodiment of the invention, a water filtration system is provided comprising (A) an upper bank comprising (a) a plurality of horizontally arranged water filtration assemblies, each water filtration assembly in the upper bank comprising a filter module comprising a filter housing including a feed inlet, a filtrate outlet, and a drain outlet, the filter housing defining a filtrate flow path between the feed inlet and the filtrate outlet, and a drain fluid flow path between the feed inlet and the drain outlet, and a porous filter across the filtrate flow path, the filtrate flow path passing through upstream and downstream surfaces of the porous filter, wherein the drain fluid flow path does not pass through the surfaces of the porous filter; (b) an upper bank feed manifold comprising an upper bank feed inlet and a plurality of water filtration assembly inlet ports, each water filtration assembly inlet port being in fluid communication with a respective filter module feed inlet; (c) an upper bank filtrate manifold comprising an upper bank filtrate outlet port and a plurality of water filtration assembly outlet ports, each water filtration assembly outlet port being in fluid communication with a respective filter module filtrate outlet, the upper bank filtrate outlet port being in fluid communication with a first constant flow fitting; (d) an upper bank drain manifold comprising an upper bank drain outlet port and a plurality of water filtration assembly drain outlet ports, each water filtration assembly drain outlet port being in fluid communication with a respective filter module drain outlet, the upper bank drain outlet port being in fluid communication with a second constant flow fitting; (B) a lower bank comprising (e) a plurality of horizontally arranged water filtration assemblies, each water filtration assembly in the lower bank comprising a filter module comprising a filter housing including a feed inlet, a filtrate outlet, and a drain outlet, the filter housing defining a filtrate flow path between the feed inlet and the filtrate outlet, and a drain fluid flow path between the feed inlet and the drain outlet, and a porous filter across the filtrate flow path, the filtrate flow path passing through upstream and downstream surfaces of the porous filter, wherein the drain fluid flow path does not pass through the surfaces of the porous filter; (f) a lower bank feed manifold comprising a lower bank feed inlet and a plurality of water filtration assembly inlet ports, each water filtration assembly inlet port being in fluid communication with a respective filter module feed inlet; (g) a lower bank filtrate manifold comprising a lower bank filtrate outlet port and a plurality of water filtration assembly outlet ports, each water filtration assembly outlet port being in fluid communication with a respective filter module filtrate outlet, the lower bank filtrate outlet port being in fluid communication with the first constant flow fitting; (h) a lower bank drain manifold comprising a lower bank drain outlet port and a plurality of water filtration assembly drain outlet ports, each water filtration assembly drain outlet port being in fluid communication with a respective filter module drain outlet, the lower bank drain outlet port being in fluid communication with a third constant flow fitting.

In accordance with another embodiment of the invention, a water filtration system is provided comprising (A) a right bank comprising (a) a plurality of horizontally arranged water filtration assemblies, each water filtration assembly in the right bank comprising a filter module comprising a filter housing including a feed inlet, a filtrate outlet, and a drain outlet, the filter housing defining a filtrate flow path between the feed inlet and the filtrate outlet, and a drain fluid flow path between the feed inlet and the drain outlet, and a porous filter across the filtrate flow path, the filtrate flow path passing through upstream and downstream surfaces of the porous filter, wherein the drain fluid flow path does not pass through the surfaces of the porous filter; (b) a right bank feed manifold comprising a right bank feed inlet and a plurality of water filtration assembly inlet ports, each water filtration assembly inlet port being in fluid communication with a respective filter module feed inlet; (c) a right bank filtrate manifold comprising a right bank filtrate outlet port and a plurality of water filtration assembly outlet ports, each water filtration assembly outlet port being in fluid communication with a respective filter module filtrate outlet, the right bank filtrate outlet port being in fluid communication with a first constant flow fitting; (d) a right bank drain manifold comprising a right bank drain outlet port and a plurality of water filtration assembly drain outlet ports, each water filtration assembly drain outlet port being in fluid communication with a respective filter module drain outlet, the right bank drain outlet port being in fluid communication with a second constant flow fitting; (B) a left bank comprising (e) a plurality of horizontally arranged water filtration assemblies, each water filtration assembly in the left bank comprising a filter module comprising a filter housing including a feed inlet, a filtrate outlet, and a drain outlet, the filter housing defining a filtrate flow path between the feed inlet and the filtrate outlet, and a drain fluid flow path between the feed inlet and the drain outlet, and a porous filter across the filtrate flow path, the filtrate flow path passing through upstream and downstream surfaces of the porous filter, wherein the drain fluid flow path does not pass through the surfaces of the porous filter; (f) a left bank feed manifold comprising a left bank feed inlet and a plurality of water filtration assembly inlet ports, each water filtration assembly inlet port being in fluid communication with a respective filter module feed inlet; (g) a left bank filtrate manifold comprising a left bank filtrate outlet port and a plurality of water filtration assembly outlet ports, each water filtration assembly outlet port being in fluid communication with a respective filter module filtrate outlet, the left bank filtrate outlet port being in fluid communication with the first constant flow fitting; (h) a left bank drain manifold comprising a left bank drain outlet port and a plurality of water filtration assembly drain outlet ports, each water filtration assembly drain outlet port being in fluid communication with a respective filter module drain outlet, the left bank drain outlet port being in fluid communication with a third constant flow fitting.

In some embodiments, the water filtration system further comprising a frame having the upper/right banks and the lower/left banks mounted thereon. In alternative embodiments, each bank can be mounted on a separate frame, or the banks can be mounted together, with or without a frame. In yet another embodiment, at least one bank can be mounted to a base (e.g., base of a Joint Modular Intermodal Container (JMIC) pallet).

In a preferred embodiment, wherein the feed inlet of the offline bank is capped or blocked, the system comprises a common filtrate fitting comprising the first constant flow fitting, wherein the common filtrate fitting is arranged to allow filtrate flow from the online bank (e.g., the upper bank or right bank) filtrate ports and upper bank or right bank filtrate manifold to pass as reverse flow through the other bank (e.g., the lower bank or left bank) of water filtration assemblies via the lower bank or left bank manifold, the lower bank or left bank module filtrate outlets, through the surfaces of the porous filter, the lower bank or left bank drain ports, through the lower bank or left bank drain manifold and through the common outlet, and, when the previously offline bank is now the online bank, to allow filtrate flow from the now online bank (e.g., now the lower bank or left bank) bank filtrate ports and lower bank or left bank filtrate manifold to pass as reverse flow through the other bank (now the offline upper bank or right bank) of upper bank or right bank water filtration assemblies via the upper bank or right bank filtrate manifold, the upper bank or right bank module filtrate outlets, through the surfaces of the porous filter, the upper bank or right bank drain ports, through the upper bank or right bank drain manifold and through the common outlet.

In another embodiment, a method for filtering water is provided, comprising passing source water into the system and obtaining filtrate from one bank, passing a portion of the filtrate as reverse flow through the other bank, and obtaining another portion of filtrate to be treated for potability.

Advantageously, the use of constant flow fittings (instead of mechanical valves, whether manually or automatically operated) can allow for integral concurrent feed and reverse flow without operator input, and can provide precise control of flows to achieve desired membrane flux without operator input. The system can be operated without an air scrub (which would require a pneumatic system), while running for extended periods between chemical cleaning. Additionally, silt build-up on membranes from water sources with high turbidity (nephelometric turbidity units (NTF)) is discouraged. The system itself does not require electrical components or power, and can be compatible with a variety of pumps, wherein the pumps are not required to be integral with embodiments of the system.

Desired flow ratios can be achieved by selection of the constant flow fittings.

Each of the components of the invention will now be described in more detail below, wherein like components have like reference numbers.

As will be explained in more detail below, merely for ease of understanding, references to the "first bank" can be used interchangeably with the terms "upper bank" and "right bank," or "upper/right bank," and references to the "second bank" can be used interchangeably with the terms "lower bank" and "left bank," or "lower/left bank."

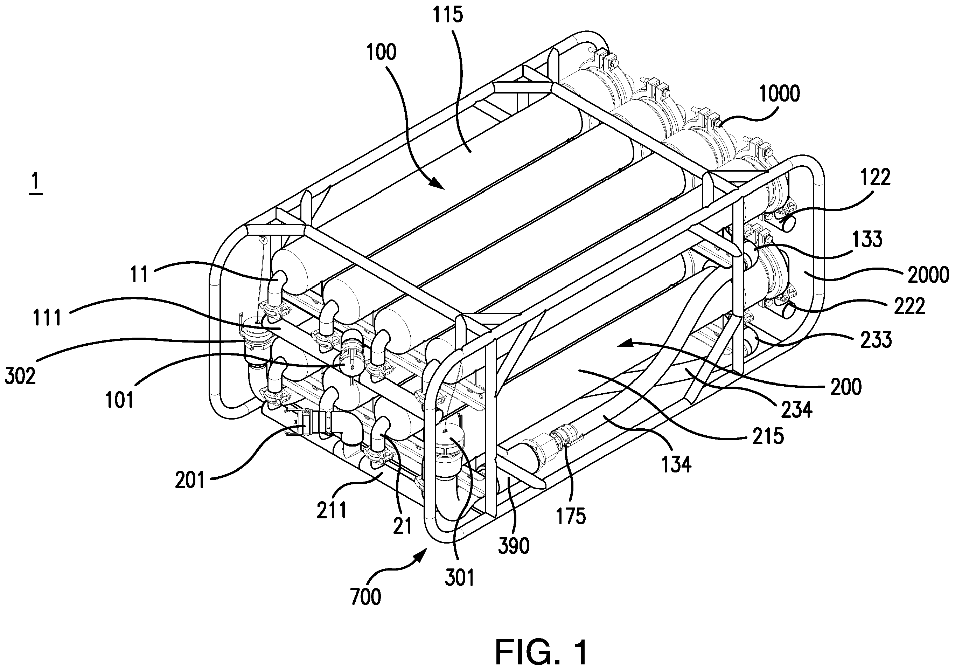

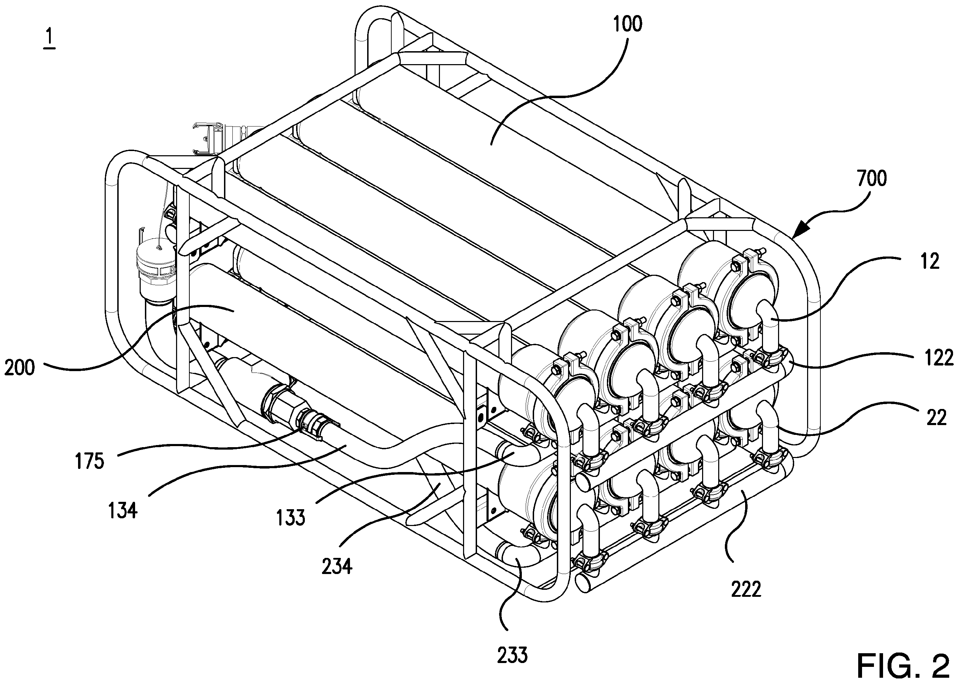

Figures 1 and 2 illustrate isometric front and rear views of an embodiment of the water filtration system 1, comprising upper bank of water filtration assemblies 1000 and a lower bank 2000 of water filtration assemblies; an upper bank feed manifold 111 and a lower bank feed manifold 211; an upper bank filtrate manifold 122 and a lower bank filtrate manifold 222; and an upper bank drain manifold 133 and a lower bank drain manifold 233.

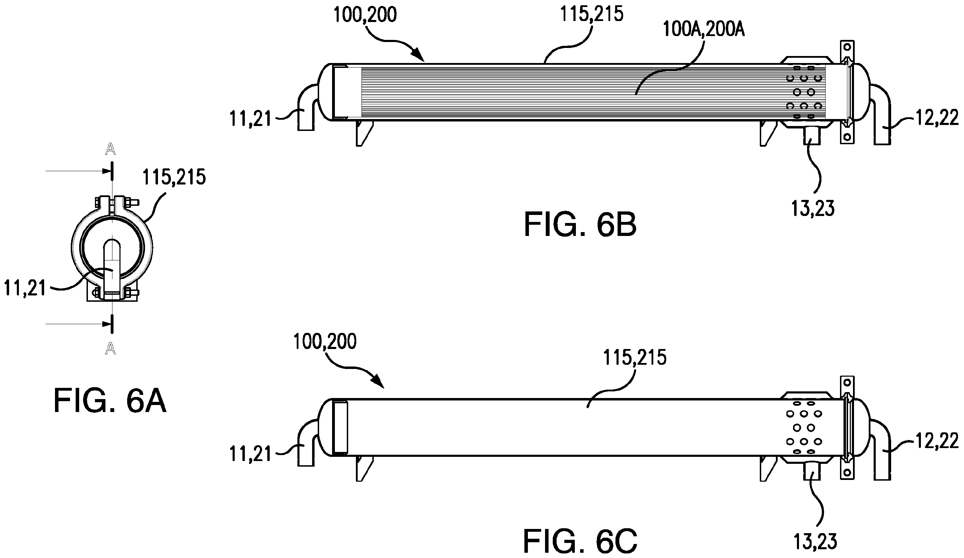

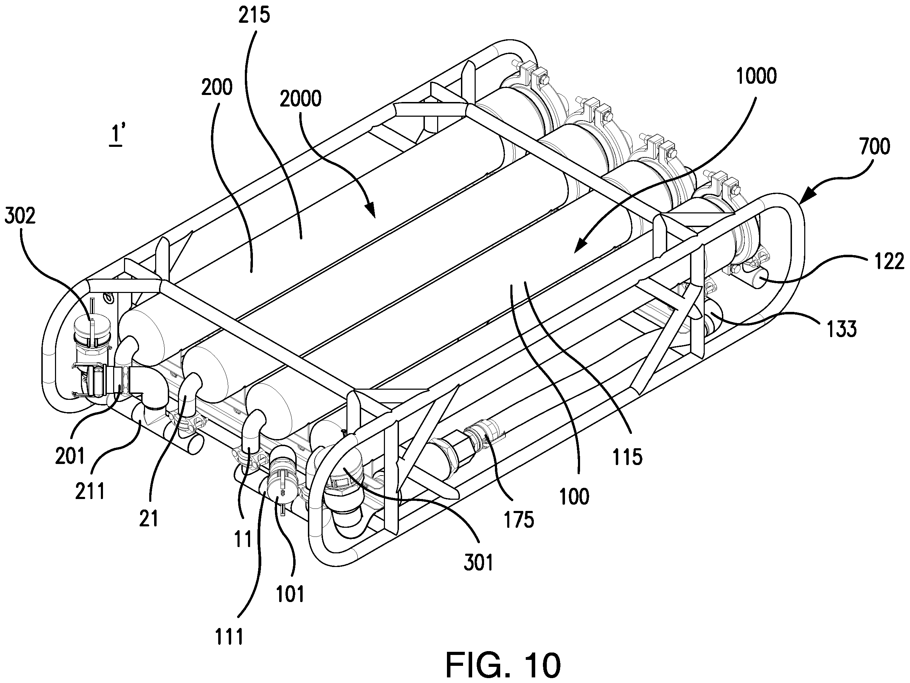

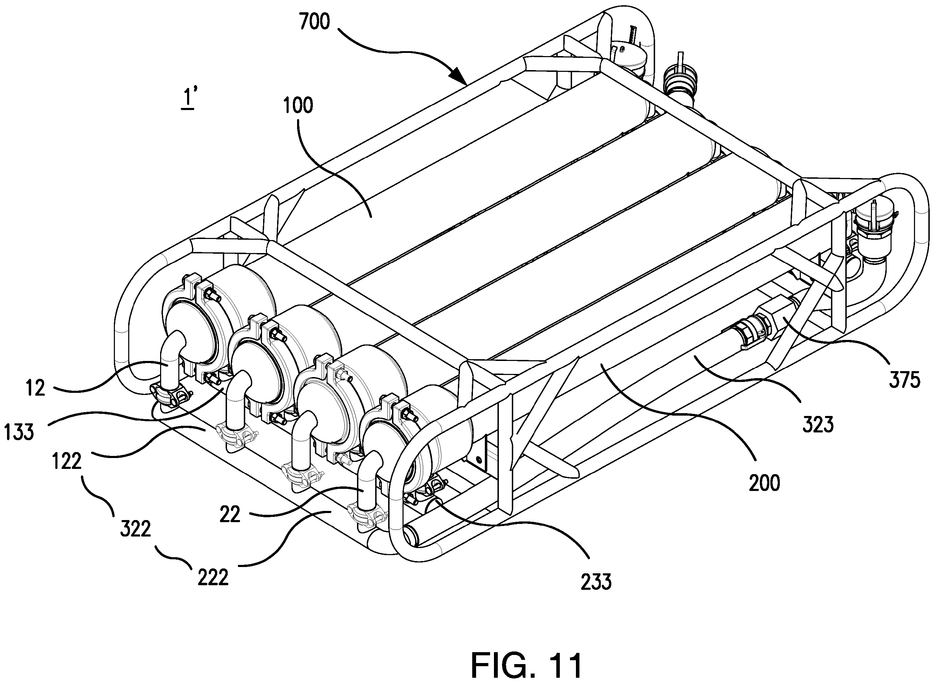

The upper and lower banks of water filtration assemblies comprise, respectively, modules 100, 200 (embodiments of the invention comprise two or more modules, the illustrated assemblies in Figures 1 and 2 each comprise 4 modules, and the illustrated assemblies in Figures 10 and 11 each comprise 2 modules, but any number of modules can be used), the respective modules each comprising a housing 115, 215, comprising a feed inlet 11, 21, a filtrate outlet 12, 22, and a drain outlet 13, 23 (shown in Figs. 6A-6C), each filter housing defining a filtrate flow path between the feed inlet and the filtrate outlet, and a drain fluid flow path between the feed inlet and the drain outlet, and having a porous filter 100A, 200A (shown in Fig. 6B) across the filtrate flow path (wherein the drain fluid flow path does not pass through the surfaces of the porous filter). As will be explained in more detail below, during a reverse flush, wherein the feed inlet of the offline bank is capped or blocked, filtrate from one bank of water filtration assemblies is passed in the reverse direction through the other (offline) bank of water filtration assemblies (i.e., passed from the filtrate outlets of the online bank to the filtrate outlets of the offline bank, though the porous filters of the offline bank, and through the drain outlets of the offline bank).

A variety of filters and filter elements can be used in accordance with embodiments of the invention. Filters 100A and 200A are illustrated in Fig. 6B as bundles of hollow porous fibers (not shown to scale), but can comprise other configurations, e.g., porous flat sheets. In those embodiments wherein the filters comprise hollow porous fibers, the filtrate fluid flow path can be "inside-out" (passing from the inner surface through the outer surface of the fiber membrane) or, more preferably, "outside-in" (passing from the outer surface through the inner surface of the fiber membrane).

The upper bank feed manifold 111 and a lower bank feed manifold 211 each have raw feed inlets 101, 201, as well as ports providing fluid communication with the respective module feed inlets 11, 21; the upper bank filtrate manifold 122 and a lower bank filtrate manifold 222 each have ports providing fluid communication with the respective module filtrate outlets 12, 22; and upper bank drain manifold 133 and a lower bank drain manifold 233 each have ports providing fluid communication with the respective module drain outlets 13, 23. Drain fluid passing from the drain manifolds passes along drain conduits 134, 234 as discussed below.

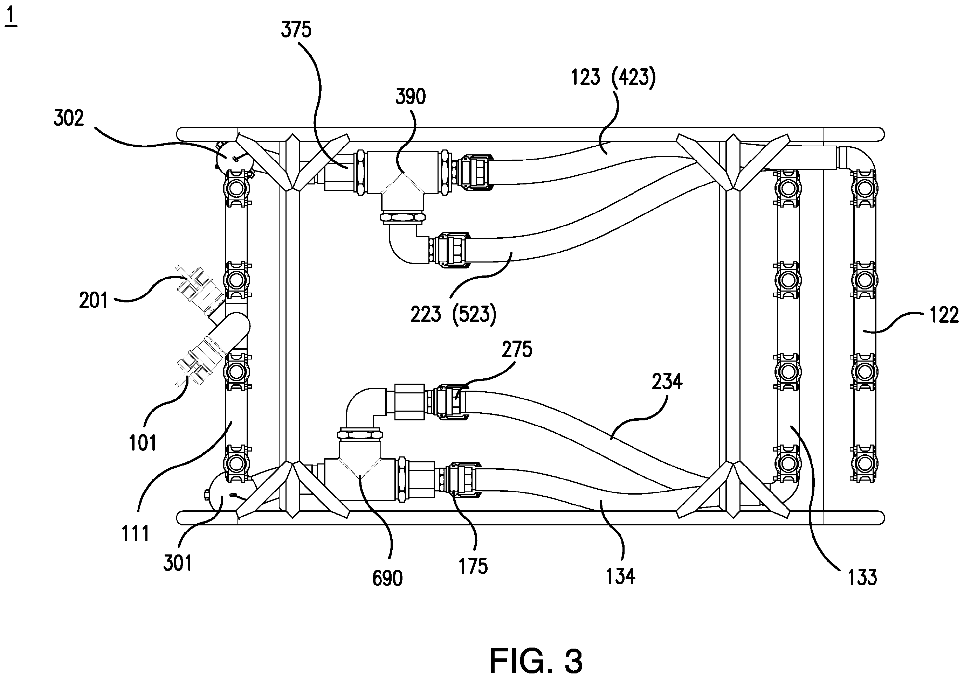

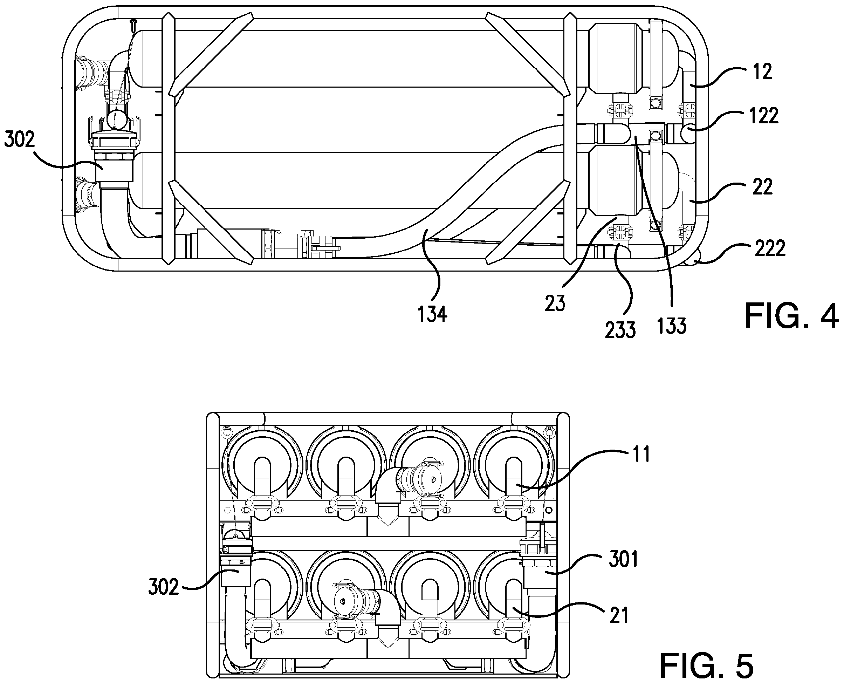

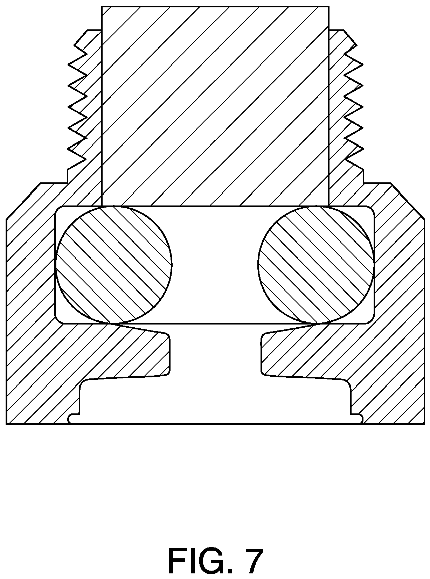

As shown in more detail in Figures 3, 4, and 5 (showing, respectively, top, side, and front views), the illustrated system 1 also comprises an upper bank filtrate conduit 123 (which will also comprise an upper bank reverse flow conduit 423, as explained in more detail below) and a lower bank filtrate conduit 223 (which will also comprise a lower bank reverse flow conduit 523, as explained in more detail below), wherein the conduits are joined at a common filtrate fitting 390 comprising a first constant flow fitting 375 (Figure 7 shows a generalized constant flow valve that can be arranged in a fitting), and a common filtrate outlet 302.

The illustrated system also comprises an upper bank drain conduit 134 communicating with a second constant flow fitting 175 (Figure 7) communicating with a common drain fitting 690, and a lower bank drain conduit 234 communicating with a third constant flow fitting 275 (Figure 7) communicating with the common drain fitting 690, the common drain fitting 690 further comprising a common drain outlet 301.

As noted above, the illustrated embodiment of the system 1 comprises an upper bank filtrate conduit 123 (that also comprises an upper bank reverse flow conduit 423) and a lower bank filtrate conduit 223 (that comprises a lower bank reverse flow conduit 523).

In the embodiment illustrated in Figures 1 and 2, the banks are mounted to a frame 700, comprising end pieces, cross pieces, and struts. A variety of frame arrangements are suitable for use in accordance with embodiments of the invention.

As also noted above, merely for ease of understanding, references to the "first bank" can be used interchangeably with the terms "upper bank" and "right bank," or "upper/right bank," and references to the "second bank" can be used interchangeably with the terms "lower bank" and "left bank," or "lower/left bank."

Thus, Figures 10 and 11 illustrate isometric front and rear views of another embodiment of the water filtration system, wherein instead of having vertically arranged (i.e., upper and lower) banks of water filtration assemblies as shown in Figures 1 and 2, the embodiment of the water filtration system 1' illustrated in Figures 10 and 11 has horizontally arranged (i.e., right and left) banks of water filtration assemblies. For ease of reference, components that are common to each embodiment of the system will have the same reference number, e.g., both the upper bank of water filtration assemblies and the right bank of water filtration assemblies will have reference number 1000, and both the lower bank of water filtration assemblies and the left bank of water filtration assemblies will have reference number 2000.

In this illustrated embodiment, system 1' includes 2 modules in each water filtration assembly, mounted on a frame 700, thus reducing weight and making it more suitable for carrying by a person.

While the embodiment of the system illustrated in Figures 10 and 11 includes right bank filtration manifold 122 and left bank filtration manifold 222, in contrast with the embodiment shown in Figures 1 and 2, in Figures 10 and 11 the right bank filtration manifold 122 and left bank filtration manifold 222 are joined together to provide a common manifold 322.

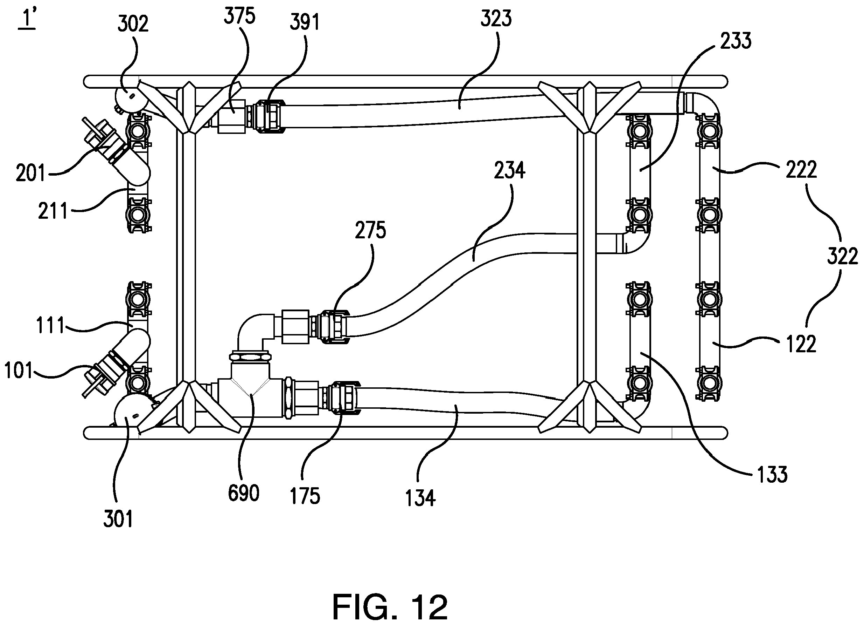

Additionally, in the illustrated embodiment shown in Figure 12, system 1' includes a single filtrate conduit/reverse flow conduit 323, joined to filtrate fitting 391 comprising first constant flow fitting 375, in contrast with the embodiment of system 1 (e.g., as shown in Figure 3) that includes upper bank filtrate conduit 123 (also comprising upper bank reverse flow conduit 423) and lower bank filtrate conduit 223 (also comprising lower bank reverse flow conduit 523), wherein the conduits are joined at a common filtrate fitting 390 comprising a first constant flow fitting 375.

Those other components that are not the same in each embodiment (e.g., frames, bases, pallets) will have different reference numbers, and will be discussed separately.

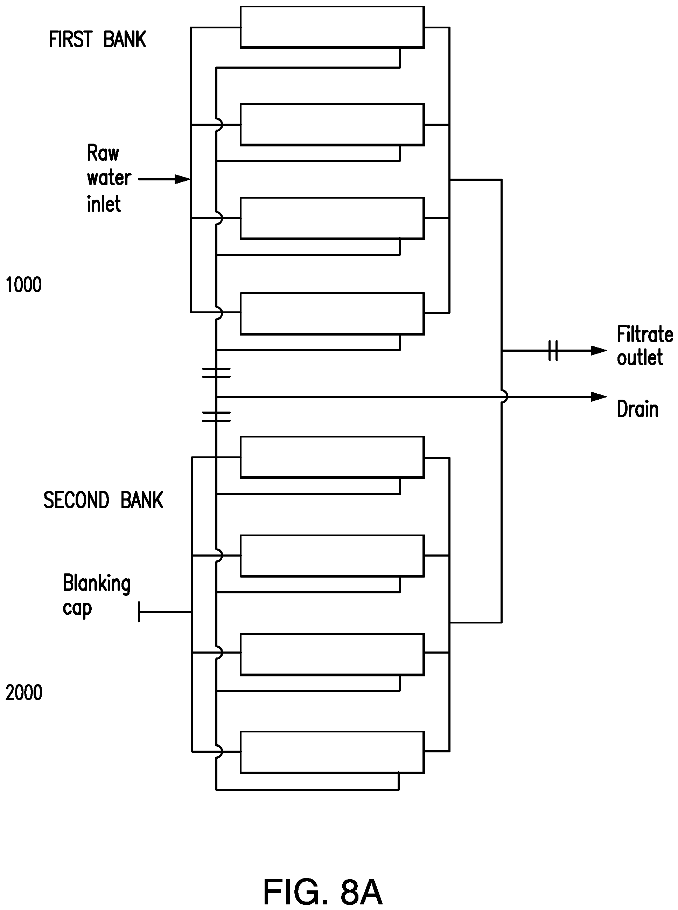

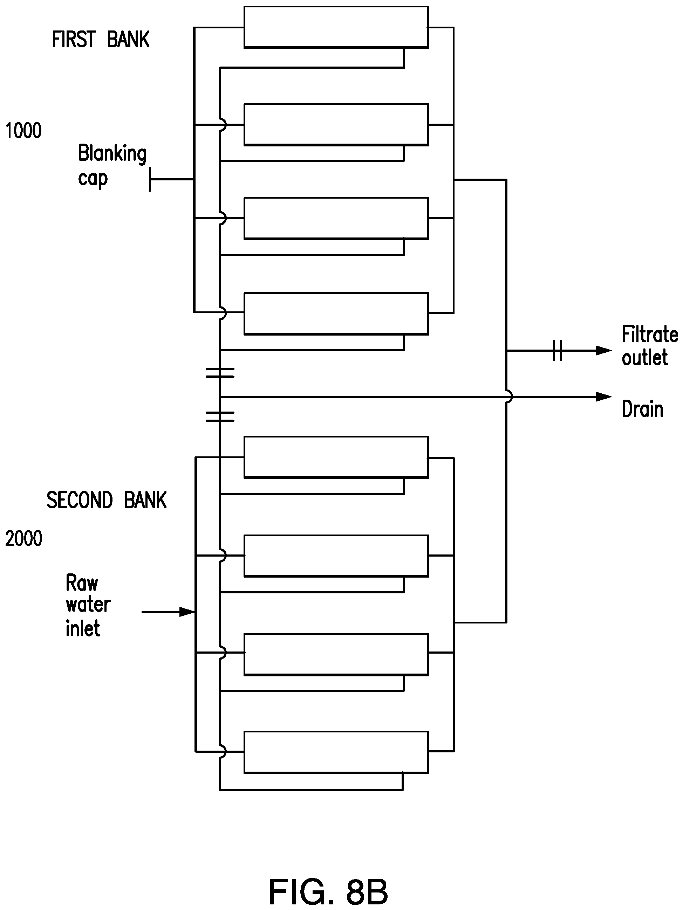

Using Figures 8A, 8B, 9A and 9B for reference, while one bank (e.g., the upper bank or right bank of water filtration assemblies) is "on line" in forward filtration and source water provides a constant forward flush, the other bank (e.g., the lower bank or left bank of water filtration assemblies) is "off line" wherein the lower/left bank is regenerated by a constant reverse flush using filtrate from the upper/right bank. For example, about two-thirds of the source water received by the online bank can pass through the modules as filtrate, while about one-third can travel down the length of each module and exit through the downwardly facing drain port, providing the feed flush. The feed flush carries away sedimentation that may have accumulated at the bottom of the housing, and thus discourages membrane fouling. About half of the filtrate from the online bank can be collected as product water (that should be chlorine post dosed for potability), while about the other half can be diverted to the offline bank to provide constant reverse flush. The volumes of water (source, filtrate, feed flush and reverse flush) can be varied as desired for particular situations and/or applications.

Thus, and using Figure 3 for additional reference, when the upper bank/right bank of water filtration assemblies 1000 is online (and the lower bank/left bank of water filtration assemblies 2000 is offline), with lower bank/left bank raw feed inlet 201 blocked and upper bank/right bank raw feed inlet 101 open, raw (source) water passes from feed inlet 101, through upper bank feed manifold 111, through the respective modules 100 via inlets 11, passing either along a fluid flow path through the porous media of filters 100A, and through the filtrate outlets 12 and through the upper bank filtrate manifold 122 (filtrate fluid), or passing along another fluid flow path (not through the filter media) through the drain outlets 13 and through the upper bank/right bank drain manifold 133 (providing a feed flush of the modules), wherein the drain fluid is subsequently passed along upper drain conduit 134 through second constant flow fitting 175 and common drain fitting 690, and through common drain outlet 301 to the source water.

Additionally, filtrate passing from the upper/right bank filtrate manifold 122 passes through upper/right bank filtrate conduit 123 to common filtrate fitting 390. A portion of the filtrate passes through the common filtrate fitting 390, first constant flow fitting 375 and common filtrate outlet 302 to a storage container, and another portion of the filtrate is diverted along lower/left bank reverse flow conduit 523 (i.e., lower/left bank filtrate conduit 223 wherein the fluid is passed in the opposite direction to provide reverse flow). Thus, the fluid diverted along lower/left bank reverse flow conduit 523 is passed in the reverse direction through the lower/left bank water filtration assemblies via lower/left bank filtrate manifold 222, lower/left bank outlets 22, through the porous filter media of filters 200A, and lower/left bank drain manifold 233, lower bank/left bank drain conduit 234, third constant flow fitting 275, common drain fitting 690 (where it combines with "feed flush" water), and through common drain outlet 301 to the source water (lower/left bank filtrate manifold 222, lower/left bank outlets 22, porous filter media of filters 200A, and lower/left bank drain manifold 233 not shown in Figure 3, see Figures 1 and 2).

In an alternative embodiment, using Figure 12 for reference, wherein the upper bank/right bank of water filtration assemblies 1000 is on line, with lower bank/left bank raw feed inlet 201 blocked and upper bank/right bank raw feed inlet 101 open, raw (source) water passes from feed inlet 101, through upper bank feed manifold 111, through the respective modules 100 via inlets 11, passing either along a fluid flow path through the porous media of filters 100A, and through the filtrate outlets 12 and through the upper bank/right bank filtrate manifold 122 (filtrate fluid), or passing along another fluid flow path (not through the filter media) through the drain outlets 13 and through the upper bank/right bank drain manifold 133 (providing a feed flush of the modules), wherein the drain fluid is subsequently passed along upper bank/right bank drain conduit 134 through second constant flow fitting 175 and common drain fitting 690, and through common drain outlet 301 to the source water.

Filtrate passing from the upper/right bank filtrate manifold 122 passes through lower bank/left bank filtrate manifold 222 and through filtrate conduit 323 to filtrate fitting 391. A portion of the filtrate passes through the filtrate fitting 391, first constant flow fitting 375 and common filtrate outlet 302 to a storage container, and another portion of the filtrate is diverted along lower bank/left bank filtrate manifold 222, lower/left bank outlets 22, through the porous filter media of filters 200A, and lower bank/left bank drain manifold 233, through lower bank/left bank drain conduit 234, third constant flow fitting 275, common drain fitting 690 (where it combines with "feed flush" water), and through common drain outlet 301 to the source water (lower/left bank outlets 22, and porous filter media of filters 200A not shown in Figure 12, see Figures 10 and 11).

Using Figures 1-3 for reference, a similar procedure occurs when the lower/left bank of filtration assemblies 2000 is on line (and the upper bank/right bank of water filtration assemblies 1000 is offline), providing a feed flush of the modules 200 and a reverse flush of the upper/right bank modules 100. Illustratively, filtrate passing from the lower/left bank filtrate manifold 222 passes through lower/left bank filtrate conduit 223 to common filtrate fitting 390. A portion of the filtrate passes through the common filtrate fitting 390, first constant flow fitting 375 and common filtrate outlet 302 to a storage container, and another portion of the filtrate is diverted along upper/right bank reverse flow conduit 423 (i.e., upper/right bank filtrate conduit 123 wherein the fluid is passed in the opposite direction to provide reverse flow). Thus, the fluid diverted along upper/right bank reverse flow conduit 423 is passed in the reverse direction through the upper/right bank water filtration assemblies via upper/right bank filtrate manifold 122, upper/right bank outlets 12, through the porous filter media of filters 100A, and upper/right bank drain manifold 133, upper bank/right bank drain conduit 134, second constant flow fitting 175, common drain fitting 690 (where it combines with "feed flush" water), and through common drain outlet 301 to the source water.

In an alternative embodiment, using Figures 10-12 for reference, a similar procedure occurs when the lower/left bank of filtration assemblies 2000 is on line (and the upper bank/right bank of water filtration assemblies 1000 is offline), providing a feed flush of the modules 200 and a reverse flush of the upper/right bank modules 100. Illustratively, filtrate passing from the lower/left bank filtrate manifold 222 passes through upper bank/right bank filtrate manifold 122 and through filtrate conduit 323 to filtrate fitting 391. A portion of the filtrate passes through the filtrate fitting 391, first constant flow fitting 375 and common filtrate outlet 302 to a storage container, and another portion of the filtrate is diverted along upper bank/right bank filtrate manifold 122, upper bank/right bank outlets 12, through the porous filter media of filters 100A, and upper bank/right bank drain manifold 133, through upper bank/right bank drain conduit 134, second constant flow fitting 175, common drain fitting 690 (where it combines with "feed flush" water), and through common drain outlet 301 to the source water.

The filters and filter elements can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating media. In accordance with an embodiment of the invention, the porous filter is, for example, a nanoporous membrane, for example, a membrane having pores of diameter between 1 nm and 100 nm, or a microporous membrane having pores of diameter between 1 µm and 10 µm.

The module housings and the manifolds can be fabricated from any suitable rigid impervious material. For example, the housing can be fabricated from a polymer, but is more typically fabricated from a metal, such as stainless steel.

Typically, the frame, base, and pallet are fabricated from a metal, such as stainless steel.

A variety of frames, bases, and pallets are suitable for use with embodiments of the invention.

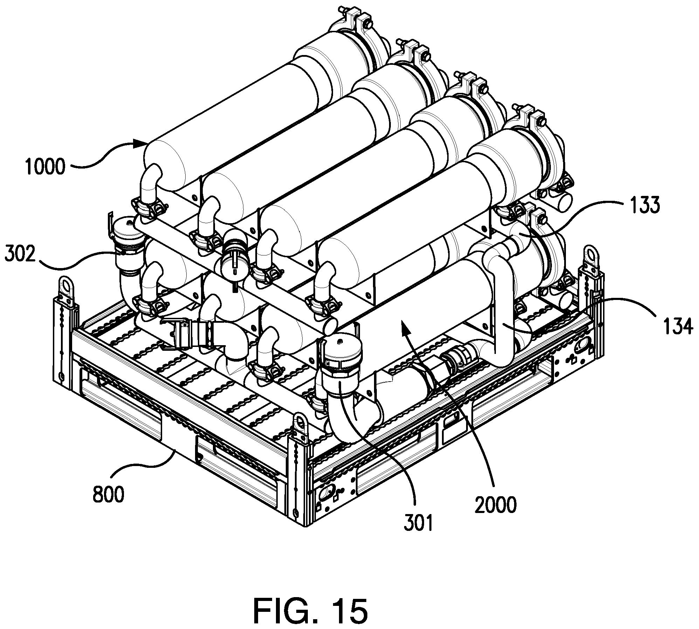

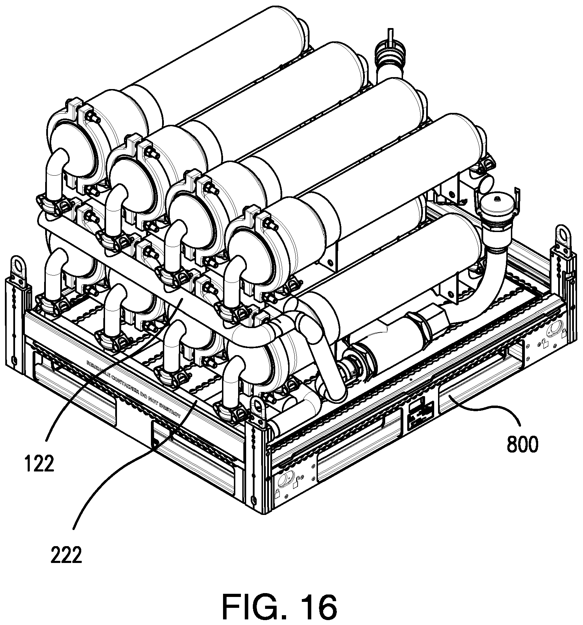

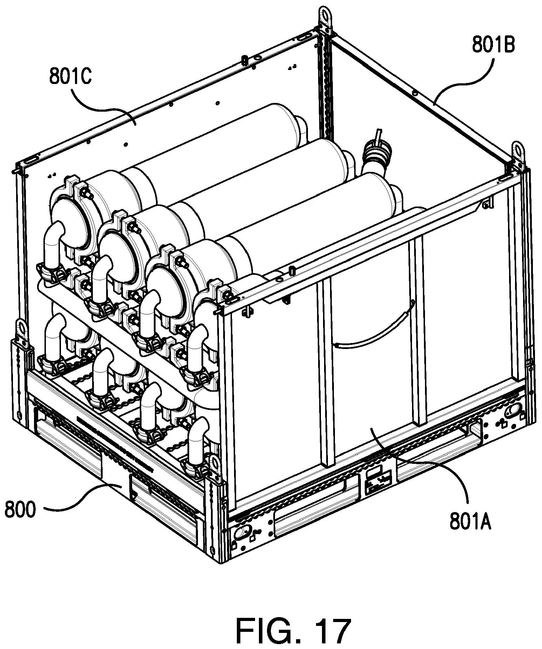

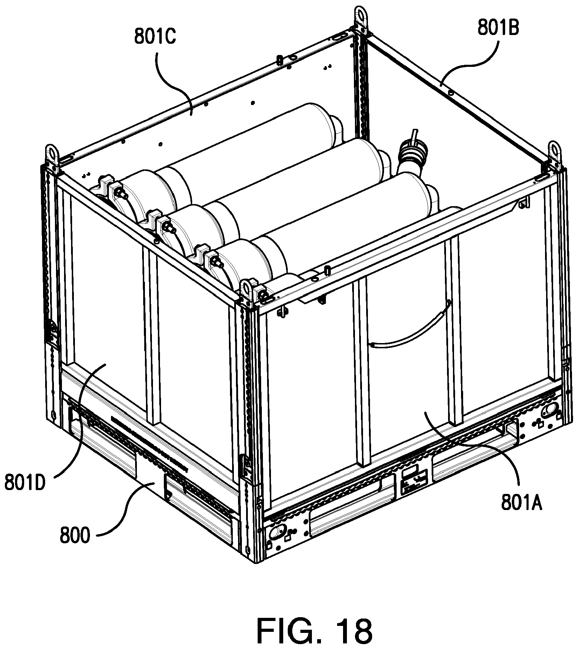

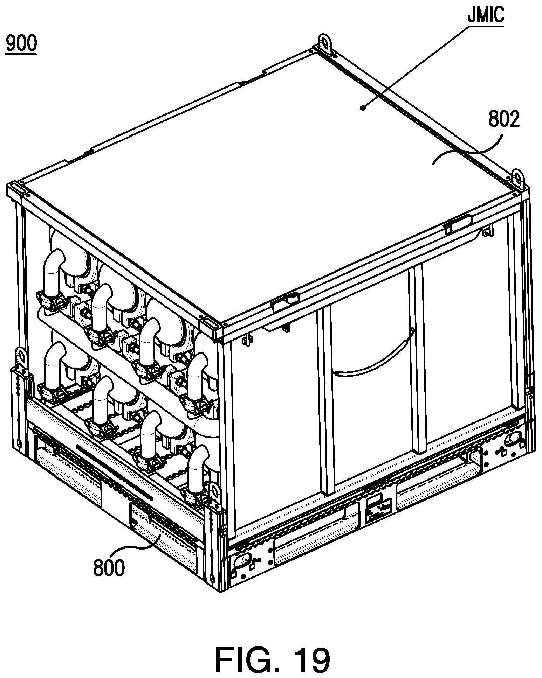

In one embodiment, using Figures 15-19 for reference, the base 800 is part of a Joint Modular Intermodal Container (JMIC), or a JMIC pallet, e.g., conforming to MIL STD 3028. JMICs are available from, for example, Garrett Container Systems, Inc. (Accident, Maryland). The embodiments illustrated in Figures 17-19 show JMIC side walls 801A, 801B, 801C, and 801D, wherein Figure 19 also shows JMIC lid 802, and JMIC container 900.

A variety of conduits, fittings, and constant flow valves (including multi-orifice, and, more preferably, single-orifice, valves) are suitable for use in embodiments of the invention. Preferably, the constant flow valves in the drain lines have the same flow rate; however, the filtrate line can have a slightly higher flow rate provided that the combined flow rate of the filtrate constant flow valve and one of the drain filtrate flow valves does not exceed the maximum desired flux rate for the online bank of membranes.

Embodiments of the system can include additional elements such as at least one of a vent (including a gas inlet and/or a gas outlet). Additionally, or alternatively, the system can include, for example, one or more additional conduits, connectors, and/or fittings.

The following examples further illustrate the invention but, of course, should not be construed as in any way limiting its scope.

### EXAMPLE 1

This example demonstrates filtration of water using an embodiment of the water filtration system.

A water filtration system is arranged as generally shown in Figures 1-7, with upper and lower banks, each bank having 4 modules comprising MICROZA UNC640A 0.1 micron membranes, connected in parallel.

The constant flow fittings in the drain lines and filtrate lines are Constant Flow Valve 2 inch single orifice BSP PVC 73 LPM part number 50FFPP73 (Maric Flow Control, Magill, South Australia).

The module housings and manifolds are stainless steel, the frame is chromium-molybdenum alloy steel.

The system is placed on a Australian Defense Force 800 kg trailer.

The system is operated as generally shown in Figures 8A, 8B, 9A, and 9B, using a diesel driven pump.

Source water is fed into one bank at a time (online bank) via upper feed manifold or lower feed water manifold while the other bank is in constant reverse flush (offline bank).

The online bank receives source water at a rate of 12 m³/h, of which two thirds (8 m³/h) passes through each of the four modules as filtrate, while one third (4 m³/h) travels down the length of each module and exiting through the downward facing drain port (feed flush). The high flow feed flush acts to carry away sediment that has accumulated at the bottom of the housing and discourages MF membrane fouling.

Half of the filtrate (4 m³/h) from the online bank is collected as product water (requires manual chlorine post dosing to be potable), while half (4 m³/h) is diverted to the offline bank as constant reverse flush. Flow ratios are achieved through the use of the constant flow fittings.

The system produces 100,000 liters per day (1/d) from fresh water sources.

### EXAMPLE 2

This example demonstrates filtration of water using another embodiment of the water filtration system.

A water filtration system is arranged as generally shown in Figures 10-12, with right and left banks, each bank having 2 modules comprising MICROZA UNC640A 0.1 micron membranes, connected in parallel.

The constant flow fittings in the drain lines and filtrate lines are Constant Flow Valve 2 inch single orifice BSP PVC 73 LPM part number 50FFPP73 (Maric Flow Control, Magill, South Australia).

The module housings and manifolds are stainless steel, the frame is chromium-molybdenum alloy steel.

The system is placed on a Australian Defense Force 800 kg trailer.

The system is operated as generally shown in Figures 8A, 8B, 9A, and 9B, using a diesel driven pump.

Source water is fed into one bank at a time (online bank) via right feed manifold or left feed water manifold while the other bank is in constant reverse flush (offline bank).

The online bank receives source water at a rate of 6 m³/h, of which two thirds (4 m³/h) passes through each of the two modules as filtrate, while one third (4 m³/h) travels down the length of each module and exiting through the downward facing drain port (feed flush). The high flow feed flush acts to carry away sediment that has accumulated at the bottom of the housing and discourages MF membrane fouling.

Half of the filtrate (2 m³/h) from the online bank is collected as product water (requires manual chlorine post dosing to be potable), while half (2 m³/h) is diverted to the offline bank as constant reverse flush. Flow ratios are achieved through the use of the constant flow fittings.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A water filtration system comprising:
(A) a first bank comprising:
(a) a plurality of horizontally arranged water filtration assemblies, each water filtration assembly in the first bank comprising a filter module comprising a filter housing including a feed inlet, a filtrate outlet, and a drain outlet, the filter housing defining a filtrate flow path between the feed inlet and the filtrate outlet, and a drain fluid flow path between the feed inlet and the drain outlet, and a porous filter across the filtrate flow path, the filtrate flow path passing through upstream and downstream surfaces of the porous filter, wherein the drain fluid flow path does not pass through the surfaces of the porous filter;
(b) a first bank feed manifold comprising a first bank feed inlet and a plurality of water filtration assembly inlet ports, each water filtration assembly inlet port being in fluid communication with a respective filter module feed inlet;
(c) a first bank filtrate manifold comprising a first bank filtrate outlet port and a plurality of water filtration assembly outlet ports, each water filtration assembly outlet port being in fluid communication with a respective filter module filtrate outlet, the first bank filtrate outlet port being in fluid communication with a first constant flow fitting;
(d) a first bank drain manifold comprising a first bank drain outlet port and a plurality of water filtration assembly drain outlet ports, each water filtration assembly drain outlet port being in fluid communication with a respective filter module drain outlet, the first bank drain outlet port being in fluid communication with a second constant flow fitting;
(B) a second bank comprising:
(e) a plurality of horizontally arranged water filtration assemblies, each water filtration assembly in the second bank comprising a filter module comprising a filter housing including a feed inlet, a filtrate outlet, and a drain outlet, the filter housing defining a filtrate flow path between the feed inlet and the filtrate outlet, and a drain fluid flow path between the feed inlet and the drain outlet, and a porous filter across the filtrate flow path, the filtrate flow path passing through upstream and downstream surfaces of the porous filter, wherein the drain fluid flow path does not pass through the surfaces of the porous filter; (f) a second bank feed manifold comprising a second bank feed inlet and a plurality of water filtration assembly inlet ports, each water filtration assembly inlet port being in fluid communication with a respective filter module feed inlet;
(g) a second bank filtrate manifold comprising a second bank filtrate outlet port and a plurality of water filtration assembly outlet ports, each water filtration assembly outlet port being in fluid communication with a respective filter module filtrate outlet, the second bank filtrate outlet port being in fluid communication with the first constant flow fitting;
(h) a second bank drain manifold comprising a second bank drain outlet port and a plurality of water filtration assembly drain outlet ports, each water filtration assembly drain outlet port being in fluid communication with a respective filter module drain outlet, the second bank drain outlet port being in fluid communication with a third constant flow fitting.

2. The system of claim 1, comprising a common filtrate fitting comprising the first constant flow fitting, wherein the common filtrate fitting is arranged to allow filtrate flow from the first bank filtrate ports and first bank filtrate manifold to pass as reverse flow through the second bank of water filtration assemblies via the second bank filtrate manifold, the second bank module filtrate outlets, through the surfaces of the porous filter, the second bank drain ports, through the second bank drain manifold and through a common outlet, and, to allow filtrate flow from the second bank filtrate ports and second bank filtrate manifold to pass as reverse flow through the first bank water filtration assemblies via the first bank filtrate manifold, the first bank module filtrate outlets, through the surfaces of the porous filter, the first bank drain ports, through the first bank drain manifold and through the common outlet.

3. The system of claim 1 or 2, wherein the first bank filtrate manifold and the second bank manifold are joined together to provide a one piece manifold.

4. A method of filtering water, the method comprising:
passing source water into the system of any one of claims 1-3 and into the water filtration assemblies in the first bank;
obtaining a filtrate;
passing a portion of the filtrate as reverse flow through the water filtration assemblies in the second bank; and
obtaining another portion of the filtrate to be treated for potability.

5. The method of claim 4, further comprising:
passing source water into the water filtration assemblies in the second bank;
obtaining a filtrate;
passing a portion of the filtrate as reverse flow through the water filtration assemblies in the first bank; and
obtaining another portion of the filtrate to be treated for potability.
